# EUROPEAN PATENT APPLICATION

(11) **EP 0 771 814 A1**
(43) Date of publication of application: **07.05.1997**
(21) Application number: 96810708.6
(22) Date of filing: 24.10.1996
(51) Int. Cl.: C07F 9/6574, C08K 5/527

(54) **Amorphous and crystalline modifications of 1,1',1"-nitrilo triethyl-tris[2,2'-methylene-bis(4,6-di-tert-butyl-phenyl)]phosphite**

(30) Priority: 02.11.1995 US 551967; 02.11.1995 US 556775
(71) Applicant: Ciba Specialty Chemicals Holding Inc., 4057 Basel (CH)
(72) Inventor: Pastor, Stephen Daniel, Danbury, CT 06810 (US); Shum, Sai Ping, Hightstown, NJ 08520 (US)

(57) **Abstract**

A novel amorphous modification and novel crystalline modifications of 1,1',1"-nitrilo{triethyl-tris[2,2'-methylene-bis(4,6-di-tert-butylphenyl)]phosphite} are disclosed. The amorphous modification is obtained by cooling rapidly said compound from the melt to ambient temperature. The crystalline modifications are obtained by crystallizing said compound from the melt at elevated temperatures.

The amorphous and crystalline modifications are effective processing stabilizers for polyolefins, particularly polypropylene.

## Description

This invention pertains to a novel amorphous and novel crystalline modifications of 1,1',1"-nitrilo{triethyl-tris[2,2'-methylene-bis(4,6-di-tert-butylphenyl)]phosphite} to a process for preparing said modifications, and to compositions stabilized therewith.

1,1',1"-Nitrilo{triethyl-tris[2,2'-methylene-bis(4,6-di-tert-butylphenyl)]phosphite} is a compound having the formula I

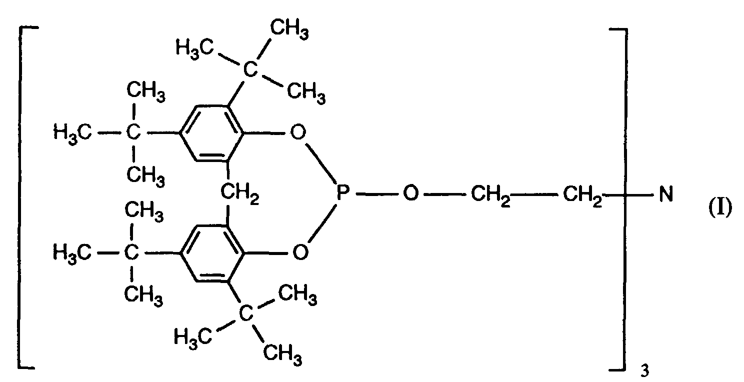

This compound of formula I is useful as a processing stabilizer for organic polymers as taught in U.S. Patent Nos. 4,318,845 and 4,374,219. The compound of formula I is disclosed as being a white powder melting at 175-181°C. As such, the powdery product has defects in terms of handling and apparent density, and exhibiting poor flowability, diffusibility into polymers, meterability, storage stability and hydrolytic stability.

It has now been found that the compound of formula I can be obtained in an amorphous modification and in different crystalline modifications which exhibit acceptable properties in respect to handling, apparent density, flowability, meterability, storage stability, hydrolytic stability and better migration into polymeric substrates.

The new amorphous form is characterized by a glass transition temperature (T_{g}) within the range of 120-124°C as determined by differential scanning calorimetry (DSC). Additionally the amorphous form of the present invention gave a featureless X-ray diffraction pattern obtained using Cu-Kα.

The new crystalline modifications are characterized by a melting point in the range of 232-243°C and 267-272°C; and by an X-ray diffraction pattern obtained using Cu-Kα which exhibits diffraction angles (2Θ) of very high intensity at 7.92, 16.94 and 18.52; lines of high intensity at 9.92 and 13.5; lines of medium intensity at 6.89, 8.70, 9.18, 10.70, 15.06, 16.04, 19.48, 20.36 and 21.32; lines of weak intensity at 5.26, 14.34 and 23.08.

The instant invention also relates to a process for the preparation of this novel amorphous modification of the compound of formula I which comprises melting said compound of formula I and rapidly cooling the melt.

Of interest is a process for the preparation of this novel amorphous modification of the compound of formula I which comprises pouring the molten material onto a cool surface maintained below 100°C, especially near 25°C.

The instant invention also relates to a process for the preparation of the novel crystalline modifications of the compound of formula I which comprises heating a melt of said compound of formula I at a temperature in the range of 170 to 200°C and crystallizing the novel crystalline modifications from the melt.

Of interest is a process for the preparation of this novel crystalline modifications of the compound of formula I which comprises seeding the melt with the novel crystalline modifications in order to increase the rate and efficiency of the melt crystallization.

Of special interest is a process for the preparation of the novel crystalline modifications of the compound of formula I wherein the melt is heated under reduced pressure of from 400 mm Hg to 0.1 mm Hg and wherein the melt crystallization is carried out in an extruder or kneader.

The novel amorphous modification and novel crystalline modifications of the compound of formula I are suitable for stabilizing organic materials against oxidative, thermal or light-induced degradation.

Illustrative examples of such organic materials are:
1. Polymers of monoolefins and diolefins, for example polypropylene, polyisobutylene, polybut-1-ene, poly-4-methylpent-1-ene, polyisoprene or polybutadiene, as well as polymers of cycloolefins, for instance of cyclopentene or norbornene, polyethylene (uncrosslinked or crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), branched low density polyethylene (BLDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/-isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
5. Polystyrene, poly(p-methylstyrene), poly(α-methylstyrene).
6. Copolymers of styrene or α-methylstyrene with dienes or acrylic derivatives, for example styrene/butadiene, styrene/acrylonitrile, styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/ styrene.
7. Graft copolymers of styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/-alkyl acrylate copolymers, acrylonitrile/alkoxyalkyl acrylate or acrylonitrile/vinyl halide copolymers or acrylonitrile/alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with diglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyether imides, polyester imides, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate and polyhydroxybenzoates, as well as block copolyether esters derived from hydroxyl-terminated polyethers; and also polyesters modified with polycarbonates or MBS.
19. Polycarbonates and polyester carbonates.
20. Polysulfones, polyether sulfones and polyether ketones.
21. Crosslinked polymers derived from aldehydes on the one hand and phenols, ureas and melamines on the other hand, such as phenol/formaldehyde resins, urea/formaldehyde resins and melamine/formaldehyde resins.
22. Drying and non-drying alkyd resins.
23. Unsaturated polyester resins derived from copolyesters of saturated and unsaturated dicarboxylic acids with polyhydric alcohols and vinyl compounds as crosslinking agents, and also halogen-containing modifications thereof of low flammability.
24. Crosslinkable acrylic resins derived from substituted acrylates, for example epoxy acrylates, urethane acrylates or polyester acrylates.
25. Alkyd resins, polyester resins and acrylate resins crosslinked with melamine resins, urea resins, isocyanates, isocyanurates, polyisocyanates or epoxy resins.
26. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
27. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
28. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.
29. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.
30. Aqueous emulsions of natural or synthetic rubber, e.g. natural latex or latices of carboxylated styrene/butadiene copolymers.
31. Polysiloxanes such as the soft, hydrophilic polysiloxanes described, for example, in U.S. Patent No. 4,259,467; and the hard polyorganosiloxanes described, for example, in U.S. Patent No. 4,355,147.
32. Polyketimines in combination with unsaturated acrylic polyacetoacetate resins or with unsaturated acrylic resins. The unsaturated acrylic resins include the urethane acrylates, polyether acrylates, vinyl or acryl copolymers with pendant unsaturated groups and the acrylated melamines. The polyketimines are prepared from polyamines and ketones in the presence of an acid catalyst.
33. Radiation curable compositions containing ethylenically unsaturated monomers or oligomers and a polyunsaturated aliphatic oligomer.
34. Epoxymelamine resins such as light-stable epoxy resins crosslinked by an epoxy functional coetherified high solids melamine resin such as LSE-4103 (Monsanto).

Accordingly the instant invention also relates to compositions comprising
(a) an organic material subject to oxidative, thermal and/or light-induced degradation, and
(b) an effective stabilizing amount of an amorphous modification or crystalline modifications of a compound of formula I, in which the amorphous modification is characterized by a glass transition temperature (T_{g}) within the range of 120-124°C (DSC) and by an X-ray diffraction pattern which is featureless; and the crystalline modifications are characterized by a melting point in the range of 232-243°C and 267-272°C; and by an X-ray diffraction pattern obtained using Cu-Kα which exhibits diffraction angles (2Θ) of very high intensity at 7.92, 16.94 and 18.52; lines of high intensity at 9.92 and 13.5; lines of medium intensity at 6.89, 8.70, 9,18, 10.70, 15.06, 16.04, 19.48, 20.36 and 21.32; lines of weak intensity at 5.26, 14.34 and 23.08.

The organic materials to be protected are preferably natural, semi-synthetic or, more particularly, synthetic polymers. Thermoplastic polymers are particularly preferred, more particularly polyolefins, most preferably polyethylene and polypropylene.

A preferred organic material is also a lubricant, lubricating oil, natural fat or wax, or fat or wax based on a synthetic ester.

To be particularly highlighted is the action of the novel modifications against thermal and oxidative degradation, in particular when subjected to heat, as in the processing of thermoplasts. The novel modifications are thus admirably suited for use as processing stabilizers.

The amorphous modification and crystalline modifications of a compound of formula I are preferably added to the material to be stabilized in amounts of 0.01 to 5%, typically of 0.01 to 3%, preferably of 0.025 to 3%, more preferably of 0.05 to 1%, based on the weight of the organic material to be stabilized.

In addition to the compounds of formula I, the novel compositions may contain further coadditives (costabilizers), typically as the following:
1. Antioxidants
   1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec- 1'-yl)phenol and mixtures thereof.
   1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
   1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl)adipate.
   1.4. Tocopherols, for example α-tocopherol, β-tocopherol, γ-tocopherol, δ-tocopherol and mixtures thereof (vitamin E).
   1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thio-bis(6-tert-butyl-2-methylphenol), 4,4'-thiobis(3,6-di-sec-amylphenol), 4,4'-bis(2,6-dimethyl-4-hydroxyphenyl)disulfide.
   1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylene-bis(6-nonyl-4-methylphenol), 2,2'-methylenebis(4,6-di-tert-butylphenol), 2,2'-ethylidene-bis(4,6-di-tert-butylphenol), 2,2'-ethylidenebis(6-tert-butyl-4-isobutylphenol), 2,2'-methylenebis[6-(α-methylbenzyl)-4-nonylphenol] 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmer-captobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis(3,5-dimethyl-2-hydroxyphenyl)butane, 2,2-bis(3,5-di-tert-butyl-4-hydroxyphenyl)propane, 2,2-bis(5-tert-butyl-4-hydroxy-2-methylphenyl)-4-n-dodecylmercaptobutane, 1,1,5,5-tetra(5-tert-butyl-4-hydroxy-2-methylphenyl)pentane.
   1.7.O-,N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)-amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
   1.8. Hydroxybenzylated malonates, for example dioctadecyl-2,2-bis(3,5-di-tert-butyl-2-hydroxybenzyl)malonate, dioctadecyl-2-(3-tert-butyl-4-hydroxy-5-methylbenzyl)malonate, didodecylmercaptoethyl-2,2-bis-(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
   1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
   1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)hexahydro-1,3,5-triazine, 1,3,5-tris(3,5-dicyclohexyl-4-hydroxybenzyl)isocyanurate.
   1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl-3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
   1.12. Acylaminophenols, for example 4-hydroxylauranilide, 4-hydroxystearanilide, octyl N-(3,5-di-tert-butyl-4-hydroxyphenyl)carbamate.
   1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]-octane.
   1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo-[2.2.2]octane.
   1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2. 2.2] octane.
   1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.17. Amides of β-(3,5-di-tert-butyl-4-hydroxyphenyl)propionic acid, e.g. N,N'-bis(3,5-di-tert-butyl-4-hydroxyphenylpropionyl)hexamethylenediamine, N,N'-bis(3,5-di-tert-butyl-4-hydroxyphenylpropionyl)trimethylenediamine, N,N'-bis(3,5-di-tert-butyl-4-hydroxyphenylpropionyl)hydrazine.
   1.18. Ascorbic acid (vitamin C)
   1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)-diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylamino-phenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- und dialkylated tert-butyldiphenylamines, 2,3-dihydro-3,3-dimethyl-4H-1,4-benzothiazine, phenothiazine, a mixture of mono- und dialkylated tert-butyl/tert-octylphenothiazines, a mixture of mono- und dialkylated tert-octylphenothiazines, N-allylphenothiazine, N,N,N',N'-tetraphenyl-1,4-diaminobut-2-ene, N,N-bis(2,2,6,6-tetramethyl-piperid-4-yl-hexamethylenediamine, bis(2,2,6,6-tetramethylpiperid-4-yl)sebacate, 2,2,6,6-tetramethylpiperidin-4-one, 2,2,6,6-tetramethylpiperidin-4-ol.
2. UV absorbers and light stabilizers
   2.1. 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, mixture of 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)-carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, and 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazol-2-ylphenol]; the transesterification product of 2-[3'-tert-butyl-5'-(2-methoxycarbonylethyl)-2'-hydroxyphenyl]-2H-benzotriazole with polyethylene glycol 300; [R-CH₂CH₂-COO(CH₂)₃ 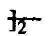 , where R = 3'-tert-butyl-4'-hydroxy-5'-2H-benzotriazol-2-ylphenyl.
   2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
   2.3. Esters of substituted and unsubstituted benzoic acids, for example 4-tert-butylphenyl salicylate, phenyl salicylate, octylphenyl salicylate, dibenzoyl resorcinol, bis(4-tert-butylbenzoyl) resorcinol, benzoyl resorcinol, 2,4-di-tertbutylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
   2.4. Acrylatres, for example ethyl α-cyano-β,β-diphenylacrylate, isooctyl α-cyano-β,-diphenylacrylate, methyl α-carbomethoxycinnamate, methyl α-cyano-β-methyl-p-methoxy-cinnamate, butyl α-cyano-β-methyl-p-methoxy-cinnamate, methyl α-carbomethoxy-p-methoxycinnamate and N-(β-carbomethoxy-β-cyanovinyl)-2-methylindoline.
   2.5. Nickel compounds, for example nickel complexes of 2,2'-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester of 4-hydroxy-3,5-di-tert-butylbenzylphosphonic acid, nickel complexes of ketoximes, e.g. of 2-hydroxy-4-methylphenyl undecylketoxime, nickel complexes of 1-phenyl-4-lauroyl-5-hydroxypyrazole, with or without additional ligands.
   2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, the condensate of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, the condensate of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl )-1,3,5-triazine and 1,2-bis(3-aminopropylamino)ethane, the condensate of 2-chloro-4,6-bis(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy-and 4-stearyloxy-2,2,6,6-tetramethylpiperidine, a condensation product of N,N'-bis-(2,2,6,6-tetramethyl-4-piperidyl)hexamethylenediamine and 4-cyclohexylamino-2,6-dichloro-1,3,5-triazine, a condensation product of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro [4,5]decane und epichlorohydrin.
   2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and the mixture thereof with 2-ethoxy-2'-ethyl-5,4'-di-tert-butoxanilide and mixtures of ortho- and para-methoxy-disubstituted oxanilides and mixtures of o- and p-ethoxy-disubstituted oxanilides.
   2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]-4,6-bis(2,4-dimethyl)-1,3,5-triazine, 2-[4-(dodecyloxy/tridecyloxy-2-hydroxypropoxy)-2-hydroxy-phenyl]-4,6-bis(2,4-dimethylphenyl)-1,3,5-triazine, 2-[2-hydroxy-4-(2-hydroxy-3-dodecyloxy-propoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxy-propoxy)phenyl]-1,3,5-triazine, 2-(2-hydroxyphenyl)-4-(4-methoxyphenyl)-6-phenyl-1,3,5-triazine.
3. Metal deactivators, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl) hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)-thiopropionyl dihydrazide.
4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenzo[d,g]-1,3,2-dioxaphosphocine, 6-fluoro-2,4,8,10-tetra-tert-butyl-12-methyldibenzo[d,g]-1,3,2-dioxaphosphocin, bis(2,4-di-tert-butyl-6-methylphenyl)methylphosphite, bis(2,4-di-tert-butyl-6-methylphenyl)ethylphosphite.
5. Hydroxylamines, for example, N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
6. Nitrones, for example N-benzyl-alpha-phenyl-nitrone, N-ethyl-alpha-methyl-nitrone, N-octyl-alpha-heptyl-nitrone, N-lauryl-alpha-undecyl-nitrone, N-tetradecyl-alpha-tridecyl-nitrone, N-hexadecyl-alpha-pentadecyl-nitrone, N-octadecyl-alpha-heptadecyl-nitrone, N-hexadecyl-alpha-heptadecyl-nitrone, N-ocatadecyl-alpha-pentadecyl-nitrone, N-heptadecyl-alpha-heptadecyl-nitrone, N-octadecyl-alpha-hexadecyl-nitrone, nitrone derived from N,N-dialkylhydroxylamine derived from hydrogenated tallow amine.
7. Thiosynergists, for example, dilauryl thiodipropionate or distearyl thiodipropionate.
8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
9. Polyamide stabilizers, for example copper salts in combination with iodides and/or phosphorus compounds and salts of divalent manganese.
10. Basic co-stabilizers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, e.g. calcium stearate, zinc stearate, magnesium behenate, magnesium stearate, sodium ricinoleate and potassium palmitate, antimony pyrocatecholate or tin pyrocatecholate.
11. Nucleating agents, for example inorganic substances such as talcum, metal oxides such as titanium dioxide or magnesium oxide, phosphates, carbonates or sulfates of, preferably, alkaline earth metals; organic compounds such as mono- or polycarboxylic acids and the salts thereof, e.g. 4-tert-butylbenzoic acid, adipic acid, diphenylacetic acid, sodium succinate or sodium benzoate; polymeric compounds such as ionic copolymers ("ionomers").
12. Fillers and reinforcing agents, for example, calcium carbonate, silicates, glass fibres, glass beads, asbestos, talc, kaolin, mica, barium sulfate, metal oxides and hydroxides, carbon black, graphite, sawdust or fibers of other natural products, synthetic fibers.
13. Other additives, for example, plasticisers, lubricants, emulsifiers, pigments, rheology additives, catalysts, flow-control agents, fluorescent whitening agents, flame-proofing agents, antistatic agents and blowing agents.
14. Benzofuranones and indolinones, for example those disclosed in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 or EP-A-0 591 102 or 3-[4-(2-acetoxyethoxy)phenyl]-5,7-di-tert-butylbenzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]-phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one.

With the exception of the benzofuranones listed in item 14, the costabilizers are added typically in concentrations of 0.01 to 10%, based on the total weight of the material to be stabilized.

Further preferred compositions comprise, besides component (a) and the amorphous or crystalline modifications of a compound of formula I, further additives, preferably phenolic antioxidants, light stabilizers and/or processing stabilizers.

Particularly preferred additives are phenolic antioxidants (item 1 in the list), sterically hindered amines (item 2.6 in the list), phosphites and phosphonites (item 4 in the list) and peroxide scavengers (item 8 in the list).

The phenolic antioxidant of particular interest is selected from the group consisting of n-octadecyl 3,5-di-tert-butyl-4-hydroxyhydrocinnamate, neopentanetetrayl tetrakis(3,5-di-tert-butyl-4-hydroxyhydrocinammate), di-n-octadecyl 3,5-di-tert-butyl-4-hydroxybenzylphosphonate, 1,3,5-tris(3,5-di-tert-butyl-4-hydroxybenzyl)isocyanurate, thiodiethylene bis(3,5-di-tert-butyl-4-hydroxyhydrocinnamate), 1,3,5-trimethyl-2,4,6-tris(3,5-di-tert-butyl-4-hydroxybenzyl)benzene, 3,6-dioxaoctamethylene bis(3-methyl-5-tert-butyl-4-hydroxyhydrocinnamate), 2,6-di-tert-butyl-p-cresol, 2,2'-ethylidene-bis(4,6-di-tert-butylphenol), 1,3,5-tris(2,6-dimethyl-4-tert-butyl-3-hydroxybenzyl)isocynurate, 1,1,3-tris(2-methyl-4-hydroxy-5-tert-butylphenyl)butane, 1,3,5-tris[2-(3,5-di-tert-butyl-4-hydroxyhydrocinnamoyloxy)ethyl]isocyanurate, 3,5-di-(3,5-di-tert-butyl-4-hydroxybenzyl)mesitol, hexamethylene bis(3,5-di-tert-butyl-4-hydroxyhydrocinnamate), 1-(3,5-di-tert-butyl-4-hydroxyanilino)-3,5-di(octylthio)-s-triazine, N,N'-hexamethylene-bis(3,5-di-tert-butyl-4-hydroxyhydrocinnamamide), calcium bis(ethyl 3,5-di-tert-butyl-4-hydroxybenzylphosphonate), ethylene bis[3,3-di(3-tert-butyl-4-hydroxyphenyl)butyrate], octyl 3,5-di-tert-butyl-4-hydroxybenzylmercaptoacetate, bis(3,5-di-tert-butyl-4-hydroxyhydrocinnamoyl)hydrazide, and N,N'-bis[2-(3,5-di-tert-butyl-4-hydroxyhydrocinnamoyloxy)-ethyl]-oxamide.

A most preferred phenolic antioxidant is neopentanetetrayl tetrakis(3,5-di-tert-butyl-4-hydroxyhydrocinnamate), n-octadecyl 3,5-di-tert-butyl-4-hydroxyhydrocinnamate, 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, 2,6-di-tert-butyl-p-cresol or 2,2'-ethylidene-bis(4,6-di-tert-butylphenol).

The hindered amine compound of particular interest is selected from the group consisting of bis(2,2,6,6-tetramethylpiperidin-4-yl) sebacate, bis(1,2,2,6,6-pentamethylpiperidin-4-yl) sebacate, di(1,2,2,6,6-pentamethylpiperidin-4-yl) (3,5-di-tert-butyl-4-hydroxybenzyl)-butylmalonate, 4-benzoyl-2,2,6,6-tetramethylpiperidine, 4-stearyloxy-2,2,6,6-tetramethylpiperidine, 3-n-octyl-7,7,9,9-tetramethyl-1,3,8-triaza-spiro[4.5]decane-2,4-dione, tris(2,2,6,6-tetramethylpiperidin-4-yl) nitrilotriacetate, 1,2-bis(2,2,6,6-tetramethyl-3-oxopiperazin-4-yl)ethane, 2,2,4,4-tetramethyl-7-oxa-3,20-diaza-21-oxodispiro[5.1.11.2] heneicosane, polycondensation product of 2,4-dichloro-6-tert-octylamino-s-triazine and 4,4'-hexamethylenebis(amino-2,2,6,6-tetramethylpiperidine), polycondensation product of 1-(2-hydroxyethyl)-2,2,6,6-tetramethyl-4-hydroxypiperidine and succinic acid, polycondensation product of 4,4'-hexamethylenebis-(amino-2,2,6,6-tetramethylpiperidine) and 1,2-dibromoethane, tetrakis(2,2,6,6-tetramethylpiperidin-4-yl) 1,2,3,4-butaneletracarboxylate, tetrakis(1,2,2,6,6-pentamethylpiperidin-4-yl) 1,2,3,4-butanetetracarboxylate, polycondensation product of 2,4-dichloro-6-morpholino-s-triazine and 4,4'-hexamethylenebis(amino-2,2,6,6-tetramethylpiperidine), N,N',N",N"'-tetrakis[(4,6-bis(butyl-2,2,6,6-tetramethylpiperidin-4-yl)-amino-s-triazin-2-yl]-1,10-diamino-4,7-diaza decane, mixed [2,2,6,6-tetramethylpiperidin-4-yl/β,β,β',β'-tetramethyl-3,9-(2,4,8,10-tetraoxaspiro[5.5]-undecane) diethyl] 1,2,3,4-butaneteuacarboxylate, mixed [1,2,2,6,6-pentamethylpiperidin-4-yl/β,β,β',β'-tetramethyl-3,9-(2,4,8,10-tetraoxaspiro[5.5]undecane)diethyl] 1,2,3,4-butanetetracarboxylate, octamethylene bis(2,2,6,6-tetramethylpiperidin-4-carboxylate), 4,4'-ethylenebis(2,2,6,6-tetramethylpiperazin-3-one), and bis(1-octyloxy-2,2,6,6-tetramethylpiperidin-4-yl) sebacate.

A most preferred hindered amine compound is bis(2,2,6,6-tetramethylpiperidin-4-yl) sebacate, the polycondensation product of 1-(2-hydroxyethyl)-2,2,6,6-tetramethyl-4-hydroxypiperidine and succinic acid, the polycondensation product of 2,4-dichloro-6-tert-octylamino-s-triazine and 4,4'-hexamethylenebis(amino-2,2,6,6-tetramethylpiperidine), N,N',N",N"'-tetrakis[(4,6-bis(butyl-(2,2,6,6-tetramethyl-piperidin-4-yl)amino)-s-triazine-2-yl]-1,10-diamino-4,7-diazadecane or bis(1-octyloxy-2,2,6,6-tetramethylpiperidin-4-yl) sebacate.

Further additives (stabilizers) which are also particularly preferred are benzofuran-2-ones, such as those disclosed, inter alia, in US-A-4 325 863, US-A-4 338 244, US-A-5 175 312, US-A-5 216 052, US-A-5 252 643, DE-A-4 316611, DE-A-4 316 622, DE-A-4 316 876, EP-A-0 589 839 and EP-A-0 591 102.

Examples of such benzofuran-2-ones are compounds of formula 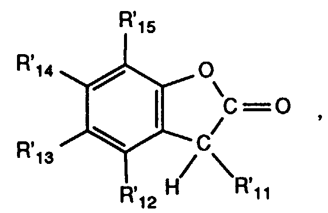 wherein
R'₁₁ is an unsubstituted or substituted carbocyclic or heterocyclic aromatic ring system;
R'₁₂ is hydrogen;
R'₁₄ is hydrogen, alkyl of 1 to 12 carbon atoms, cyclopentyl, cyclohexyl or chloro;
R'₁₃ has the meaning of R'₁₂ or R'₁₄ or is a radical of formula 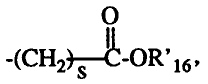 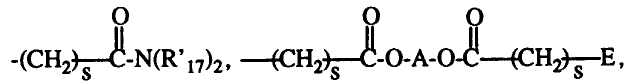 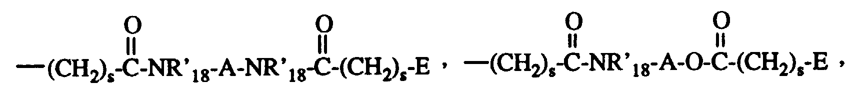 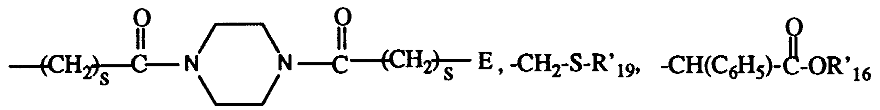 or -D-E , wherein
R'₁₆ is hydrogen, alkyl of 1 to 18 carbon atoms, alkyl of 2 to 18 carbon atoms which is interrupted by oxygen or sulfur, dialkylaminoalkyl having a total of 3 to 16 carbon atoms, cyclopentyl, cyclohexyl, phenyl or phenyl which is substituted by 1 to 3 alkyl radicals having a total of at most 18 carbon atoms;
s is 0, 1 or 2;
substituents R'₁₇ are each independently of one another hydrogen, alkyl of 1 to 18 carbon atoms, cyclopentyl, cyclohexyl, phenyl; phenyl which is substituted by 1 or 2 alkyl radicals having a total of at most 16 carbon atoms, a radical of formula -C₂H₄OH, -C₂H₄-O-CₜH₂ₜ₊₁ or 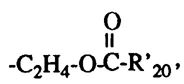 or, together with the linking nitrogen atom, form a piperidine or morpholine radical;
t is 1 to 18;
R'₂₀ is hydrogen, alkyl of 1 to 22 carbon atoms, or cycloalkyl of 5 to 12 carbon atoms;
A is alkylene of 2 to 22 carbon atoms which may be interrupted by nitrogen, oxygen or sulfur;
R'₁₈ is hydrogen, alkyl of 1 to 18 carbon atoms, cyclopentyl, cyclohexyl, phenyl; phenyl which is substituted by 1 or 2 alkyl radicals having a total of at most 16 carbon atoms, or benzyl;
R'₁₉ is alkyl of 1 to 18 carbon atoms;
D is -O-, -S-, -SO-, -SO₂- or -C(R'₂₁)₂-;
substituents R'₂₁ are each independently of one another hydrogen, C₁-C₁₆alkyl, the two R'₂₁ radicals together containing 1 to 16 carbon atoms, and R'₂₁ is furthermore phenyl or a radical of formula 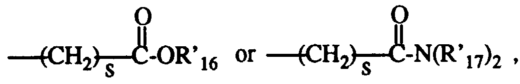 wherein s, R'₁₆ and
R'₁₇ are as defined above;
E is a radical of formula 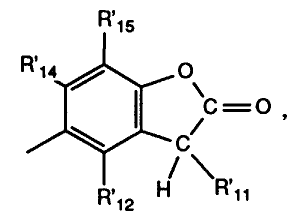 wherein R'₁₁, R'₁₂ and R'₁₄ are as defined above; and
R'₁₅ is hydrogen, alkyl of 1 to 20 carbon atoms, cyclopentyl, cyclohexyl, chloro, or a radical of formula 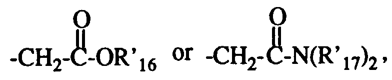 wherein R'₁₆ and R'₁₇ are as defined above, or R'₁₅ and R'₁₄, taken together, form a tetramethylene radical.

Preferred benzofuran-2-ones are those wherein R'₁₃ is hydrogen, alkyl of 1 to 12 carbon atoms, cyclopentyl, cyclohexyl, chloro or a radical of formula 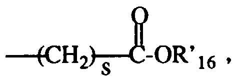 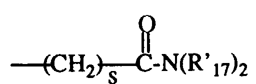 or -D-E, wherein s, R'₁₆, R'₁₇, D and E are as defined above, and R'₁₆ is preferably hydrogen, alkyl of 1 to 18 carbon atoms, cyclopentyl or cyclohexyl.

Preferred benzofuran-2-ones are also those wherein R'₁₁ is phenyl or phenyl which is substituted by 1 or 2 alkyl radicals having a total of at most 12 carbon atoms; R'₁₂ is hydrogen; R'₁₄ is hydrogen or alkyl of 1 to 12 carbon atoms; R'₁₃ is hydrogen, alkyl of 1 to 12 carbon atoms, 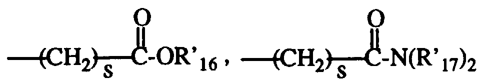 or -D-E; R'₁₅ is hydrogen, alkyl of 1 to 20 carbon atoms, 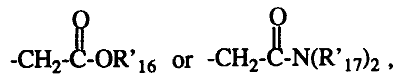 or R'₁₅ and R'₁₄, taken together, form a tetramethylene radical, in which groups s, R'₁₆, R'₁₇, D and E are as defined at the outset.

Particularly interesting benzofuran-2-ones are also those wherein R'₁₃ is hydrogen, alkyl of 1 to 12 carbon atoms or -D-E; R'₁₂ and R'₁₄ are each independently of the other hydrogen or alkyl of 1 to 4 carbon atoms; R'₁₅ is alkyl of 1 to 20 carbon atoms, and D and E are as defined at the outset.

Of particular interest are finally also those benzofuran-2-ones, wherein R'₁₃ is alkyl of 1 to 4 carbon atoms or -D-E; R'₁₂ and R'₁₄ are hydrogen; R'₁₅ is alkyl of 1 to 4 carbon atoms, cyclopentyl or cyclohexyl, D is a -C(R'₂₁)₂- group, and E is a radical of formula 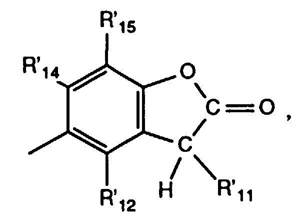 the substituents R'₂₁ being identical or different and are each alkyl of 1 to 4 carbon atoms, and R'₁₁, R'₁₂, R'₁₄ and R'₁₅ are as defined above.

The amount of benzofuran-2-ones additionally employed can vary within wide limits. The novel compositions may typically contain them in amounts of 0.0005 to 10 % by weight, preferably of 0.001 to 5 % by weight, most preferably of 0.01 to 2 % by weight.

The amorphous modification and crystalline modifications of a compound of formula I and any further additives are incorporated into the polymeric organic material by known methods, typically before or during shaping or alternatively by applying the dissolved or dispersed compounds to the polymeric organic material, with subsequent evaporation of the solvent, when used. The amorphous and crystalline modifications of a compound of formula I can also be added to the materials to be stabilized in the form of a masterbatch which contains these compounds in a concentration of typically 2.5 to 25 % by weight.

The amorphous and crystalline modifications of a compound of formula I can also be added before or during polymerisation or before crosslinking.

The amorphous and crystalline modifications of a compound of formula I can be incorporated into the material to be stabilized in pure form or encapsulated in waxes, oils or polymers.

The amorphous and crystalline modifications of a compound of formula I can also be sprayed onto the polymer to be stabilized. They are able to dilute other additives (e.g. the conventional additives mentioned above) or their melts, so that they can also be sprayed onto the polymer to be stabilized together with these additives. Application by spraying during deactivation of the polymerisation catalysts is particularly advantageous, in which case the steam used for the deactivation may be used for spraying.

In the case of spherically polymerised polyolefins, the amorphous and crystalline modifications of a compound of formula I may be usefully applied by spraying, if desired together with other additives.

The materials stabilized in this manner can be used in a very wide range of forms, typically including sheets, filaments, ribbons moulded articles, profiles or as binders for paints, adhesives or putties.

As already mentioned, the organic materials to be protected are preferably organic polymers, more particularly synthetic polymers. It is especially useful to protect thermoplastic materials and, preferably, polyolefins. To be highlighted in this connection is in particular the excellent action of the amorphous and crystalline modifications of a compound of formula I as processing stabilizers (heat stabilizers). For this purpose, they are usefully added to the polymer before or during processing. However, other polymers (e.g. elastomers) or lubricants or hydraulic fluids can also be stabilized against degradation, such as light-induced, thermal or oxidative degradation. Examples of elastomers will be found in the above list of possible organic materials.

Suitable lubricants and hydraulic fluids may be based on mineral or synthetic oils, or mixtures thereof. The lubricants are known to the person skilled in the art and are described in the relevant technical literature, for example in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) and in "Ullmanns Enzyklopädie der technischen Chemie", Vol. 13, pages 85-94 (Verlag Chemie, Weinheim, 1977).

The lubricating oil may be a mineral oil, a synthetic oil or any mixture of such oils. Mineral oils are preferred and examples of these include paraffinic hydrocarbon oils e.g. a mineral oil having a viscosity of 46 mm²/s at 40°C; "150 Solvent Neutral" a solvent refined neutral mineral oil having a viscosity of 32 mm²/s at 40°C; and "solvent bright-stocks", a high boiling residue from the process of refining mineral oil, and having a viscosity of 46 mm²/s at 40°C.

Synthetic lubricating oils which may be present may be synthetic hydrocarbons such as polybutenes, alkyl benzenes and poly-alpha olefins as well as simple di-, tri- and tetra-esters, complex esters and polyesters derived from carboxylic acid esters of formula: G₁-CCC-alkylene-COOG₂ wherein "alkylene" denotes an alkylene residue having from 2 to 14 carbon atoms and G₁ G₂ are the same or different and each is an alkyl group having from 6 to 18 carbon atoms. Tri-esters which are of use as lubricating oil base stocks are those derived from trimethylolpropane and C₆-C₁₈ mono-carboxylic acids or mixtures thereof, whereas suitable tetra-esters include those derived from pentaerythritol and a C₆-C₁₈ mono-carboxylic acid or mixtures thereof.

Complex esters suitable for use as components of the composition of the present invention are those derived from monobasic acids, dibasic acids and polyhydric alcohols, for instance the complex ester derived from trimethylol propane, caprylic acid and sebacic acid.

Suitable polyesters are those derived from any aliphatic dicarboxylic acid having from 4 to 14 carbon atoms and at least one aliphatic dihydric alcohol having from 3 to 12 carbon atoms, e.g. those derived from azelaic acid or sebacic acid and 2,2,4-trimethylhexane-1,6-diol.

The amorphous and crystalline modifications of a compound of formula I according to the invention are active as additives in lubricants even when used in very small amounts. They are admixed to the lubricants advantageously in an amount of 0.01 to 5 % by weight, preferably in an amount of 0.05 to 3 % by weight and particularly preferably in an amount of 0.1 to 1 % by weight, in each case based on the lubricant.

The lubricating oils applicational media can also contain other additives which may be added to improve the basic properties of lubricants e.g. metal passivators, viscosity-index improvers, pour-point depressants, dispersing agents, detergents, additional rust inhibitors, extreme pressure additives, anti-wear additives and antioxidants.

A series of such compounds can be found, for example, in the above list "1. Antioxidants", in particular items 1.1 to 1.19. The following additives must be mentioned additionally by way of example:

### Examples of other antioxidants:

Aliphatic or aromatic phosphites, esters of thiodipropionic acid or of thiodiacetic acid, or salts of dithiocarbamic or dithiophosphoric acid, 2,2,12,12-tetramethyl-5,9-dihydroxy-3,7,11-trithiatridecane and 2,2,15,15-tetramethyl-5,12-dihydroxy-3,7,10,14-tetrathiahexadecane.

### Examples of metal deactivators, for example for copper, are:

a) Benzotriazoles and derivatives thereof, for example 4- or 5-alkylbenzotriazoles (e.g. tolutriazole) and derivatives thereof, 4,5,6,7-tetrahydrobenzotriazole and 5,5'-methylenebisbenzotriazole; Mannich bases of benzotriazole or tolutriazole, e.g. 1-[bis(2-ethylhexyl)aminomethyl)tolutriazole and 1-[bis(2-ethylhexyl)aminomethyl)benzotriazole; and alkoxyalkylbenzotriazoles such as 1-(nonyloxymethyl)-benzotriazole, 1-(1 -butoxyethyl)benzotriazole and 1-(1-cyclohexyloxybutyl)-tolutriazole.
b) 1,2,4-Triazoles and derivatives thereof, for example 3-alkyl(or aryl)-1,2,4-triazoles, and Mannich bases of 1,2,4-triazoles, such as 1-[bis(2-ethylhexyl)aminomethyl-1,2,4-triazole; alkoxyalkyl-1,2,4-triazoles such as 1-(1-butoxyethyl)-1,2,4-triazole; and acylated 3-amino-1,2,4-triazoles.
c) Imidazole derivatives, for example 4,4'-methylenebis(2-undecyl-5-methylimidazole) and bis[(N-methyl)imidazol-2-yl]carbinol octyl ether.
d) Sulfur-containing heterocyclic compounds, for example 2-mercaptobenzothiazole, 2,5-dimercapto-1,3,4-thiadiazole and derivatives thereof; and 3,5-bis[di(2-ethylhexyl)aminomethyl]-1,3,4-thiadiazolin- 2-one.
e) Amino compounds, for example salicylidenepropylenediamine, salicylaminoguanidine and salts thereof.

### Examples of rust inhibitors are:

a) Organic acids, their esters, metal salts, amine salts and anhydrides, for example alkyl- and alkenylsuccinic acids and their partial esters with alcohols, diols or hydroxycarboxylic acids, partial amides of alkyl- and alkenylsuccinic acids, 4-nonylphenoxyacetic acid, alkoxy- and alkoxyethoxycarboxylic acids such as dodecyloxyacetic acid, dodecyloxy(ethoxy)acetic acid and the amine salts thereof, and also N-oleoylsarcosine, sorbitan monooleate, lead naphthenate, alkenylsuccinic anhydrides, for example dodecenylsuccinic anhydride, 2-carboxymethyl-1-dodecyl-3-methylglycerol and the amine salts thereof.
b) Nitrogen-containing compounds, for example:
   I. Primary, secondary or tertiary aliphatic or cycloaliphatic amines and amine salts of organic and inorganic acids, for example oil-soluble alkylammonium carboxylates, and also 1-[N,N-bis(2-hydroxyethyl)amino]-3-(4-nonylphenoxy)propan-2-ol.
   II. Heterocyclic compounds, for example: substituted imidazolines and oxazolines, and 2-heptadecenyl-1-(2-hydroxyethyl)imidazoline.
c) Phosphorus-containing compounds, for example: Amine salts of phosphoric acid partial esters or phosphonic acid partial esters, and zinc dialkyldithiophosphates.
d) Sulfur-containing compounds, for example: barium dinonylnaphthalenesulfonates, calcium petroleum sulfonates, alkylthio-substituted aliphatic carboxylic acids, esters of aliphatic 2-sulfocarboxylic acids and salts thereof.
e) Glycerol derivatives, for example: glycerol monooleate, 1-(alkylphenoxy)-3-(2-hydroxyethyl)glycerols, 1-(dkylphenoxy)-3-(2,3-dihydroxypropyl)glycerols and 2-carboxyalkyl-1,3-dialkylglycerols.

### Examples of viscosity index improvers are:

Polyacrylates, polymethacrylates, vinylpyrrolidone/methacrylate copolymers, polyvinylpyrrolidones, polybutenes, olefin copolymers, styrene/acrylate copolymers and polyethers.

### Examples of pour-point depressants are:

Polymethacrylate and alkylated naphthalene derivatives.

### Examples of dispersants/surfactants are:

Polybutenylsuccinic amides or -imides, polybutenylphosphonic acid derivatives and basic magnesium, calcium and barium sulfonates, phenolates and salicylates.

### Examples of antiwear additives are:

Sulfur- and/or phosphorus- and/or halogen-containing compounds, e.g. sulfurised olefins and vegetable oils, zinc dialkyldithiophosphates, alkylated triphenyl phosphates, tritolyl phosphate, tricresyl phosphate, chlorinated paraffins, alkyl and aryl di- and trisulfides, amine salts of mono- and dialkyl phosphates, amine salts of methylphosphonic acid, diethanolaminomethyltolyltriazole, bis(2-ethylhexyl)aminomethyltolyltriazole, derivatives of 2,5-dimercapto-1,3,4-thiadiazole, ethyl 3-[(diisopropoxyphosphinothioyl)thio]propionate, triphenyl thiophosphate (triphenylphosphorothioate), tris(alkylphenyl) phosphorothioate and mixtures thereof (for example tris(isononylphenyl) phosphorothioate), diphenyl monononylphenyl phosphorothioate, isobutylphenyl diphenyl phosphorothioate, the dodecylamine salt of 3-hydroxy-1,3-thiaphosphetane 3-oxide, trithiophosphoric acid 5,5,5-tris[isooctyl 2-acetate], derivatives of 2-mercaptobenzothiazole such as 1-[N,N-bis-(2-ethylhexyl)aminomethyl]-2-mercapto-1H-1,3-benzothiazole, and ethoxycarbonyl-5-octyldithiocarbamate.

Accordingly, a preferred embodiment of this invention is the use of an amorphous modification or crystalline modifications of a compound of formula I for stabilizing organic materials against oxidative, thermal and/or light-induced degradation.

The amorphous modification or crystalline modifications of a compound of formula I according to the invention are preferably used as processing stabilizers (thermostabilizers) in thermoplastic polymers.

The invention also relates to a process for stabilizing an organic material against oxidative, thermal or light-induced degradation, which comprises incorporating therein or applying thereto an amorphous modification or crystalline modifications of a compound of formula I.

The following Examples illustrate the invention more fully. Parts and percentages are by weight.

Differential scanning calorimetry (DSC) measurements are obtained on a TA Instrument Inc., 910 differential scanning calorimeter, with a 100 mm/min nitrogen purge, aligned aluminum pan, temperature scan at 5°C/min to 230°C.

X-ray diffraction patterns are recorded on a Philips Norelco X-ray Diffractometer unit, using Cu-Kα radiation with a nickel filter.

### Example 1: Preparation of the crystalline modifications of the compound of formula I.

The compound of formula I,1,1',1"-nitrilo{triethyl-tris[2,2'-methylene-bis(4,6-di-tert-butylphenyl)] phosphite}, is prepared according to procedure of Example 3 of U.S. Patent No. 4,318,845. The product obtained is heated at 200°C in vacuo (0.1 mm Hg) to obtain a melt The melt is heated at 200°C until a crystalline mass forms, approximately 16 hours. The crystalline mass is then ground into a white powder using a mortar and pestle. A 90% yield of a mixture of the novel crystalline modifications of the compound of formula I is obtained: m.p.= 243°C and 272°C (the melting point is determined by differential scanning calorimetry and the peak temperature in the endotherm is recorded as the melting points).

X-ray diffraction patterns are recorded on a Philips Norelco X-ray Diffractometer unit using Cu-Kα radiation with a nickel filter. Said X-ray patterns for the instant new crystalline forms exhibit diffraction angles and intensities as summarized in Table A.

**Table A :**

| Diffraction Angle (2Θ) | Relative Intensity (%) |
|---|---|
| 5.26 | 17 |
| 6.89 | 21 |
| 7.92 | 100 |
| 8.70 | 21 |
| 9.18 | 21 |
| 9.92 | 31 |
| 10.70 | 23 |
| 13.50 | 34 |
| 14.34 | 19 |
| 15.06 | 29 |
| 16.04 | 28 |
| 16.94 | 67 |
| 18.52 | 69 |
| 19.48 | 26 |
| 20.36 | 28 |
| 21.32 | 21 |
| 23.08 | 17 |

### Example 2: Comparative Example

The X-ray diffraction pattern of the compound of formula I, prepared according to the procedure of Example 3 of U.S. Patent No. 4,318,845 exhibits diffraction angles (2Θ) which are clearly different from those listed for the instant compound in Example 1. The X-ray pattern of the compound of Example 3 of U.S. Patent No. 4,318,845 is summarized in Table B.

**Table B :**

| Diffraction Angle (2Θ) | Relative Intensity (%) |
|---|---|
| 5.22 | 83 |
| 7.24 | 18 |
| 8.62 | 100 |
| 9.46 | 25 |
| 10.44 | 59 |
| 11.58 | 23 |
| 12.30 | 45 |
| 14.26 | 46 |
| 15.38 | 21 |
| 16.04 | 43 |
| 16.86 | 41 |
| 17.56 | 43 |
| 18.50 | 76 |
| 19.76 | 46 |
| 20.66 | 23 |
| 21.38 | 31 |
| 22.32 | 18 |
| 23.60 | 18 |
| 25.74 | 18 |
| 27.60 | 19 |

This X-ray pattern shows that the crystalline form of the prior art compound is clearly different from the crystalline forms of the instant compound of formula I as seen by the X-ray pattern shown in Example 1 (Table A).

### Example 3: Flowability Properties

This example illustrates the superior flowability properties of the new crystalline modifications of the compound of formula I prepared in Example 1 as compared to the flow properties of the compound of formula I as prepared according to the procedure of Example 3 of U.S. Patent No. 4,318,845.

The angle of repose is measured according to the procedure reported by G. Gold et al. in J. Pharm. Sci., 55, 1291 (1966). A smaller angle of repose indicated a superior flowing solid product. The results are summarized in Table 1.

**Table 1:**

| Compound of | Angle of Repose (degrees) |
|---|---|
| Example 1 (new crystalline modifications) | 37 |
| Example 3 of U.S. 4,318,845 (prior art) | 49 |

Accordingly, these data show that the instant crystalline modifications demonstrate superior flowability properties compared to the prior art compound.

### Example 4: Bulk Density

This example illustrates the superior packaging properties of the new crystalline modifications of the compound of formula I as prepared in Example 1 as compared to the powder form of the compound of Example 3 of U.S. Patent No. 4,318,845. Both compounds have the same particle sizes (40-70 microns).

The apparent bulk density of the solids is measured according to the method of ASTM D-1895 (79). A higher apparent bulk density allows for a greater mass per unit volume which affords advantages in packaging of the solid product, such as lower costs for the packaging material, less storage space is required, etc.. The results are summarized in Table 2.

**Table 2:**

| Compound of | Bulk Density (g/ml) |
|---|---|
| Example 1 (new crystalline modifications) | 0.47 |
| Example 3 of U.S. 4,318,845 (prior art) | 0.33 |

These data show that the new crystalline modifications exhibits far superior packaging properties compared to the prior art compound.

### Example 5: Process Stabilization of Polypropylene at 274°C.

The blank formation comprises unstabilized polypropylene (PROFAX 6501, Himont) containing 0.075% by weight of calcium stearate. The test additives are incorporated into the polyproyplene by dry blending or, when the additive is a liquid, using a minimum amount of methylene chloride solvent. The solvent is then removed by evaporation under reduced pressure. The stabilized resin formulation is extruded at 90 rpm from a 2.54 cm diameter extruder at 274°C with a residence time of 90 seconds. After each of the first, third and fifth extrusions, the melt flow rate (in grams/10 minutes) is determined by ASTM method D1238 on the pellets obtained from the extruder.

The instant crystalline modifications (Example 1) are effective in stabilizing polypropylene against thermal and oxidative degradation as shown by a minimum change in the melt flow rate in the presence of a representative phenolic antioxidant and is essentially as effective as the prior art compound of U.S. 4,318,845.

Pellets obtained after the first, third and fifth extrusions are compression molded into 3.2 mm plaques at 232°C and the yellowness index (YI) values are determined according to ASTM method D1925. Lower YI values indicate less discoloration.

The instant crystalline modifications are effective in stabilizing polypropylene against discoloration as shown by a minimum change in the yellowness index in the presence of a representative phenolic antioxidant and is essentially as effective as the prior art compound of U.S. 4,318,845.

### Example 6: Solubility in LLDPE Film at Various Temperatures.

Experiments are carried out to determine the solubility of the crystalline modifications of a compound of formula I (Example 1) into linear low density polyethylene (LLDPE) films at 20°C, 40°C and 60°C by diffusion-in of a relatively homogeneous particle size (<70 microns) of the test sample suspended in silicon oil.

Each sample is carefully ground with a mortar and pestle and the particle size below 70 microns is separated by sieving with a 200 mesh screen. The powder is then suspended in silicon oil (polydimethylsiloxane, L-45, Union Carbide Chemicals) at a concentration of approximately 38 % (wt/wt). A few drops of this suspension is placed on a 0.254 mm thick, 5.08 cm x 5.08 cm compression molded film and a second film of the same dimension is placed on top. The films are gently pressed together so that the suspension forms a thin liquid layer between the polymer films. Excess suspension is removed and the procedure is repeated till a stack of eight films (six films for evaluation) are prepared. The stack is then placed between two 6.35 cm x 6.35 cm ceramic tiles and wrapped in aluminum foil and held together with a G-clamp. Each stack is aged at 20°C, 40°C and 60°C under a nitrogen atmosphere. At specified intervals, a single film is removed from the stack and the excess suspension is washed from the film with hexane. The film is then analyzed by X-ray fluorescence for total phosphorus content. LLDPE containing 0, 1000 ppm and 2000 ppm of the test compound are used as standard controls for this X-ray fluorescence method.

The instant crystalline modifications of the compound of formula I (Example 1) are more soluble in LLDPE than is the prior art compound of Example 3 of U.S. 4,318,845.

### Example 7: Stabilization of Unsaturated Elastomer.

The crystalline modification of a compound of formula I (Example 1) is evaluated in an emulsion of SBR (cold polymerized, 23.5 % styrene with a 52 Mooney Viscosity). The unstabilized SBR (60 g) is added to the mixing chamber of a Brabender Plasticorder set at 150°C and 60 rpm. After 30 seconds, 0.5 % by weight of the compound of instant Example 1 is added to the chamber. Stability of the SBR is determined by the time until onset of crosslinking of the rubber as indicated by an increase in the torque curve. The sample stabilized by the instant compound has a longer induction time till crosslinking occurs than does the unstabilized SBR.

### Example 8: Stabilization of Polyol.

A premix of 10 g of water, 0.25 g of triethylenetetramine, 2 g of L-5740 (silicone surfactant, Union Carbide) and 20 g of ANTIBLAZE® AB-100 (chlorinated aromatic flame retardant, Albright & Wilson) is added to 200 g of 3000 molecular weight polyether polyol containing the stabilizer package listed below∗. The mixture is stirred for five minutes with a high speed Lightning Mixer. Then 0.4 g of stannous octoate is added and the mixture is stirred for 5 seconds. Finally, 125 g of toluene diisocyanate (80 % 2,6-isomer; 20 % 2,4-isomer) is added. The mixture is stirred for 7 seconds at high speed mixing and is then poured into a 25.4 cm x 25.4 cm x 12.7 cm cardboard box. The foam is allowed to rise completely. After standing 5 minutes, the box is removed and the sample cured in a microwave oven for five minutes at 50% power. The foam is then immediately air cured at 125°C for three minutes. The foams are then cut in half for visual assessment of discoloration or scorch.

*Stabilizer package: Control is 2,6-di-tert-butyl-4-methylphenol (BHT) 2000 ppm; and NAUGARD® 445 (diphenylamine antioxidant, Uniroyal) 2000 ppm. The instant package is the above plus 1000 ppm of the compound of Example 1.

Visual inspection of the two foams shows that the foam containing the instant stabilizer package with the compound of Example 1 present is less discolored than the foam stabilized with the control stabilizer package. The crystalline modifications of a compound of formula I demonstrates better scorch protection.

### Example 9: Stabilization of Polycarbonate.

Additive free bisphenol A polycarbonate (LEXAN® 141-111N, General Electric) is dried and blended with 0.3 weight percent of a benzotriazole UV absorber (TINUVIN® 329, Ciba-Geigy) and 0.08 weight percent of instant compound of Example 1. The mixture is extruded and pelletized at 288°C on a 2.54 cm single screw extruder. Injection molded plaques 5.08 cm x 5.08 cm x 3.175 mm are prepared in a BOY 30M injection molder at 293°C with a mold temperature of 150°C. The resulting plaques are measured for yellowness index (YI) using ASTM D 1925-70. The plaques containing the instant compound of Example 1 have a lower YI values than those containing the UV absorber alone demonstrating the better performance achieved by the concomitant presence of the instant phosphite.

### Example 10: Stabilization of Poly(ethylene terephthalate).

Poly(ethylene terephthalate), PET (KODAPAR® 7352, Eastman Chemical) is tumble blended with 0.5 % by weight of the compound of instant Example 1. The polymer is then extruded and pelletized at 260°C in a MPM 2.54 cm single screw extruder. The pellets are collected, redried and reextruded 5 times. Pellets are collected from each extrusion pass and the polymer intrinsic viscosity measured. PET containing the instant compound of Example 1 shows a higher retention of original intrinsic viscosity through the five extrusion passes than does PET containing no stabilizer.

### Example 11: Stabilization of Poly(butylene terephthalate).

Poly(butylene terephthalate), PBT (RYNITE® 9160, DuPont) is tumble blended with 0.3 % by weight of the compound of instant Example 1. The polymer is then extruded and pelletized at 260°C. A portion of the collected pellets are reextruded under the same conditions for a second pass. The remainder from the first extrusion is injection molded into 2" x 2" x 125 mil (5.08 cm x 5.08 cm x 3.175 mm) plaques at 282°C with a 100°C mold temperature in a BOY 30M molder. Intrinsic viscosities of the second pass extrudate and the injection molded plaques are determined. The PBT containing the instant compound of Example 1 shows a better retention of intrinsic viscosity value than does PBT containing no stabilizer.

The plaques are measured for yellowness index (color) using ASTM D1925-70. The plaques containing the instant compound of Example 1 have a lower YI values (less discoloration) than do the plaques prepared from the control unstabilized PBT.

### Example 12: Stabilization of 6,6-Nylon.

6,6-Nylon (ZYTEL® 101, DuPont) is thoroughly dried in a vacuum oven and tumble blended with 0.5 % by weight of the compound of instant Example 1. The polyamide is extruded on a 2.54 cm MPM extruder at 302°C. The collected pellets are injection molded at 302°C with the mold at 150°C in a BOY 30M injection molder. The plaques obtained are measured for yellowness index (YI) values using ASTM D1925-70. The plaques containing the instant compound of Example 1 exhibit lower YI values (less discoloration) than do the unstabilized control plaques.

### Example 13: Stabilization of ABS.

A solution of 0.25 g of the instant compound of Example 1 in 40 ml of hexane/methanol is added to a rapidly stirred suspension of 100 g of ABS (acrylonitrile/butadiene/styrene terpolymer) in 600 g of water. The suspension is filtered and dried under vacuum at 40°C for 40 hours. To the dried powder is added 2 % by weight of titanium dioxide and 1 % by weight of N,N'-ethylenebisstearamide on a two roll mill at 180°C over four minutes. Compression molded plaques (0.8 mm) are prepared at 175°C and placed in an air oven at 180°C for 45 minutes. The color of said plaques are determined as yellowness index values using ASTM D1925-70. The plaques containing the instant compound of Example 1 exhibit lower yellowness index values (less discoloration) than do the control plaques from unstabilized ABS resin.

### Example 14: Preparation of the amorphous modification of the compound of formula L

The compound of formula I,1,1',1"-nitrilo{triethyl-tris[2,2'-methylene-bis(4,6-di-tert-butylphenyl)]phosphite}, is prepared according to procedure of Example 3 of U.S. Patent No. 4,318,845. The product obtained is heated at 210°C until a clear melt is obtained. The melt is cooled rapidly to ambient temperature to yield a glassy solid with a T_{g}(DSC) of 120-124°C. The white solid is conveniently ground into a white powder using a mortar and pestle. The X-ray diffraction pattern obtained using Cu-Kα for the instant amorphous compound is featureless whereas the prior art compound of Example 3 of U.S. Patent No. 4,318,845 shows a crystalline pattern clearly different from the featureless pattern found for the instant amorphous compound.

### Example 15: Bulk Density

This example illustrates the superior packaging properties of the novel amorphous solid modification of the compound of formula I as prepared in Example 14 as compared to the powder form of the compound of Example 3 of U.S. Patent No. 4,318,845.

The apparent bulk density of the solids is measured according to the method of ASTM D-1895 (79). A higher apparent bulk density allows for a greater mass per unit volume which affords advantages in packaging of the solid product, such as lower costs for the packaging material, less storage space is required, etc.. The results are summarized in Table 3.

**Table 3:**

| Compound of | Bulk Density (g/ml) |
|---|---|
| Example 14 (new amorphous modification) | 0.43 |
| Example 3 of U.S. 4,318,845 (prior art) | 0.33 |

The instant amorphous solid modification prepared in Example 14 has a much higher bulk density than the prior art compound of Example 3 of U.S. Patent No. 4,318,845 with its concomitant superior packaging properties.

### Example 16: Process Stabilization of Polypropylene at 274°C.

The blank formation comprises unstabilized polypropylene (PROFAX® 6501, Himont) containing 0.075% by weight of calcium stearate. The test additives are incorporated into the polyproyplene by dry blending or, when the additive is a liquid, using a minimum amount of methylene chloride solvent The solvent is then removed by evaporation under reduced pressure. The stabilized resin formulation is extruded at 90 rpm from a 2.54 cm diameter extruder at 274°C with a residence time of 90 seconds. After each of the first, third and fifth extrusions, the melt flow rate (in grams/10 minutes) is determined by ASTM method D1238 on the pellets obtained from the extruder.

The amorphous modification of the compound of formula I (Example 14) is effective in stabilizing polypropylene against thermal and oxidative degradation as shown by a minimum change in the melt flow rate in the presence of a representative phenolic antioxidant and is essentially as effective as the prior art compound of U.S. 4,318,845.

Pellets obtained after the first, third and fifth extrusions are compression molded into 3.2 mm plaques at 232°C and the yellowness index (YI) values are determined according to ASTM method D1925. Lower YI values indicate less discoloration.

The amorphous modification of the compound of formula I (Example 14) is effective in stabilizing polypropylene against discoloration as shown by a minimum change in the yellowness index in the presence of a representative phenolic antioxidant and is essentially as effective as the prior art compound of U.S. 4,318,845.

### Example 17: Solubility in Lubricating Oil.

The following experiments are performed to determine the solubility of the amorphous modification of the compound of formula I (compound A, Example 14) and prior art compound (compound B, Example 2) in Mobil BB oil. Both compounds have the same uniform particle sizes (40-70 micron).

### Compounds Tested:

Compound A = amorphous modification of 1,1',1"-nitrilo{triethyl-tris[2,2'-methylene-bis-(4,6-di-tert-butylphenyl)]phosphite}, prepared in accordance with instant Example 14.

Compound B = powder form of 1,1',1"-nitrilo{triethyl-tris[2,2'-methylene-bis(4,6-di-tert-butylphenyl)] phosphite), prepared in accordance with Example 3 of U.S. Patent No. 4,318,845 (Example 2 of instant application).

### Experiment 17a:

Into a vial of 980 mg of Mobil BB oil is added 20mg of compound A at ambient temperature. For the first 60 minutes, the vial is shaken every 15 minutes. After the initial 60 minutes, the vial is left standing. All of compound A dissolves into the oil after 3 hours to give a clear solution.

### Experiment 17b:

Into a vial of 980 mg of Mobil BB oil is added 20 mg of compound B at ambient temperature. For the first 60 minutes, the vial is shaken every 15 minutes. After the initial 60 minutes, the vial is left standing. After 3 hours, compound B gives a cloudy suspension.

### Experiment 17c:

Into a vial of 980 mg of Mobil BB oil is added 20 mg of compound A at ambient temperature. The vial is then placed into a 60°C oil bath. After 20 minutes, all of compound A dissolves into the oil to give a clear solution.

### Experiment 17d:

Into a vial of 980 mg of Mobil BB oil is added 20 mg of compound B at ambient temperature. The vial is then placed into a 60°C oil bath. After 20 minutes, compound B gives a cloudy suspension.

The results are summarized in Table 4.

**Table 4:**

| Experiment | Concentration of Test Compound (% by weight) | Temp. | Oberservation | Time |
|---|---|---|---|---|
| 17a | 2 % A | RT | clear solution | 3 hrs. |
| 17b | 2 % B | RT | cloudy suspension | 3 hrs. |
| 17c | 2 % A | 60°C* | clear solution | 20 min. |
| 17d | 2 % B | 60°C* | cloudy suspension | 20 min. |
| RT is room temperature. | | | | |

| | | | | |
|---|---|---|---|---|
| * The temperature reading is the oil bath temperature | | | | |

In summary, the instant amorphous modification of the compound of formula I (Example 14) shows a faster rate of dissolving and better solubility in lubricants as compared to the prior art powder form. This provides better compatibility and more uniform distribution of the instant compound with an organic material during formulation compared to the prior art compound.

### Example 18: Solubility in LLDPE Film at Various Temperatures.

Experiments are carried out to determine the solubility of the amorphous modification of the compound of formula I (Example 14) into linear low density polyethylene (LLDPE) films at 20°C, 40°C and 60°C by diffusion-in of a relatively homogeneous particle size (<70 microns) of the test sample suspended in silicon oil.

Each sample is carefully ground with a mortar and pestle and the particle size below 70 microns is separated by sieving with a 200 mesh screen. The powder is then suspended in silicon oil (polydimethylsiloxane, L-45, Union Carbide Chemicals) at a concentration of approximately 38 % (wt/wt). A few drops of this suspension is placed on a 0.254 mm thick, 5.08 cm x 5.08 cm compression molded film and a second film of the same dimension is placed on top. The films are gently pressed together so that the suspension forms a thin liquid layer between the polymer films. Excess suspension is removed and the procedure is repeated till a stack of eight films (six films for evaluation) are prepared. The stack is then placed between two 6.35 cm x 6.35 cm ceramic tiles and wrapped in aluminum foil and held together with a G-clamp. Each stack is aged at 20°C, 40°C and 60°C under a nitrogen atmosphere. At specified intervals, a single film is removed from the stack and the excess suspension is washed from the film with hexane. The film is then analyzed by X-ray fluorescence for total phosphorus content. LLDPE containing 0, 1000 ppm and 2000 ppm of the test compound are used as standard controls for this X-ray fluorescence method.

The instant amorphous modification of the compound of formula I (Example 14) is more soluble in LLDPE than is the prior art compound of Example 3 of U.S. 4,318,845.

### Example 19: Stabilization of Unsaturated Elastomer.

The amorphous modification of the compound of formula I (Example 14) is evaluated in an emulsion of SBR (cold polymerized, 23.5 % styrene with a 52 Mooney Viscosity). The unstabilized SBR (60 g) is added to the mixing chamber of a Brabender Plasticorder set at 150°C and 60 rpm. After 30 seconds, 0.5 % by weight of the compound of instant Example 14 is added to the chamber. Stability of the SBR is determined by the time until onset of crosslinking of the rubber as indicated by an increase in the torque curve. The sample stabilized by the instant compound has a longer induction time till crosslinking occurs than does the unstabilized SBR.

### Example 20: Stabilization of Polyol.

A premix of 10 g of water, 0.25 g of triethylenetetramine, 2 g of L-5740 (silicone surfactant, Union Carbide) and 20 g of ANTIBLAZE® AB-100 (chlorinated aromatic flame retardant, Albright & Wilson) is added to 200 g of 3000 molecular weight polyether polyol containing the stabilizer package listed below∗. The mixture is stirred for five minutes with a high speed Lightning Mixer. Then 0.4 g of stannous octoate is added and the mixture is stirred for 5 seconds. Finally, 125 g of toluene diisocyanate (80 % 2,6-isomer; 20 % 2,4-isomer) is added. The mixture is stirred for 7 seconds at high speed mixing and is then poured into a 25.4 cm x 25.4 cm x 12.7 cm cardboard box. The foam is allowed to rise completely. After standing 5 minutes, the box is removed and the sample cured in a microwave over for five minutes at 50% power. The foam is then immediately air over cured at 125°C for three minutes. The foams are then cut in half for visual assessment of discoloration or scorch.

*Stabilizer package: Control is 2,6-di-tert-butyl-4-methylphenol (BHT) 2000 ppm; and NAUGARD® 445 (diphenylamine antioxidant, Uniroyal) 2000 ppm. Instant package is the above plus 1000 ppm of the compound of Example 14.

Visual inspection of the two foams shows that the foam containing the instant stabilizer package with the compound of Example 14 present is less discolored than the foam stabilized with the control stabilizer package. The instant amorphous modification of a compound of formula I demonstrates better scorch protection.

### Example 21: Stabilization of Polycarbonate.

Additive free bisphenol A polycarbonate (LEXAN® 141-111N, General Electric) is dried and blended with 0.3 weight percent of a benzotriazole UV absorber (TINUVIN® 329, Ciba-Geigy) and 0.08 weight percent of instant compound of Example 14. The mixture is extruded and pelletized at 288°C on a 2.54 cm single screw extruder. Injection molded plaques (5.08 cm x 5.08 cm x 3.175 mm) are prepared in a BOY 30M injection molder at 293°C with a mold temperature of 150°C. The resulting plaques are measured for yellowness index (YI) using ASTM D 1925-70. The plaques containing the instant compound of Example 14 have a lower YI values than those containing the UV absorber alone demonstrating the better performance achieved by the concomitant presence of the instant amorphous modification of a compound of formula I.

### Example 22: Stabilization of Poly(ethylene terephthalate).

Poly(ethylene terephthalate), PET (KODAPAR® 7352, Eastman Chemical) is tumble blended with 0.5 % by weight of the compound of instant Example 14. The polymer is then extruded and pelletized at 260°C in a MPM 2.54 cm single screw extruder. The pellets are collected, redried and reextruded 5 times. Pellets are collected from each extrusion pass and the polymer intrinsic viscosity measured. PET containing the instant compound of Example 14 shows a higher retention of original intrinsic viscosity through the five extrusion passes than does PET containing no stabilizer.

### Example 23: Stabilization of Poly(butylene terephthalate).

Poly(butylene terephthalate), PBT (RYNITE® 9160, DuPont) is tumble blended with 0.3 % by weight of the compounds of instant Example 14. The polymer is then extruded and pelletized at 260°C. A portion of the collected pellets are reextruded under the same conditions for a second pass. The remainder from the first extrusion is injection molded into 5.08 cm x 5.08 cm x 3.175 mm plaques at 282°C with a 100°C mold temperature in a BOY 30M molder. Intrinsic viscosities of the second pass extrudate and the injection molded plaques are determined. The PBT containing the instant compound of Example 14 shows a better retention of intrinsic viscosity value than does PBT containing no stabilizer.

The plaques are measured for yellowness index (color) using ASTM D1925-70. The plaques containing the instant compound of Example 14 have a lower YI values (less discoloration) than do the plaques prepared from the control unstabilized PBT.

### Example 24: Stabilization of 6,6-Nylon.

6,6-Nylon (ZYTEL® 101, DuPont) is thoroughly dried in a vacuum oven and tumble blended with 0.5 % by weight of the compound of instant Example 14. The polyamide is extruded on a 2.54 cm MPM extruder at 302°C. The collected pellets are injection molded at 302°C with the mold at 150°C in a BOY 30M injection molder. The plaques obtained are measured for yellowness index (YI) values using ASTM D1925-70. The plaques containing the instant compound of Example 14 exhibit lower YI values (less discoloration) than do the unstabilized control plaques.

### Example 25: Stabilization of ABS.

A solution of 0.25 g of the instant compound of Example 14 in 40 ml of hexane/methanol is added to a rapidly stirred suspension of 100 g of ABS (acrylonitrile/butadiene/styrene terpolymer) in 600 g of water. The suspension is filtered and dried under vacuum at 40°C for 40 hours. To the dried powder is added 2 % by weight of titanium dioxide and 1 % by weight of N,N'-ethylenebisstearamide on a two roll mill at 180°C over four minutes. Compression molded plaques (0.8 mm) are prepared at 175°C and placed in an air oven at 180°C for 45 minutes. The color of said plaques are determined as yellowness index values using ASTM D1925-70. The plaques containing the instant compound of Example 14 exhibit lower yellowness index values (less discoloration) than do the control plaques from unstabilized ABS resin.

## Claims

1. An amorphous modification and crystalline modifications of a compound formula I 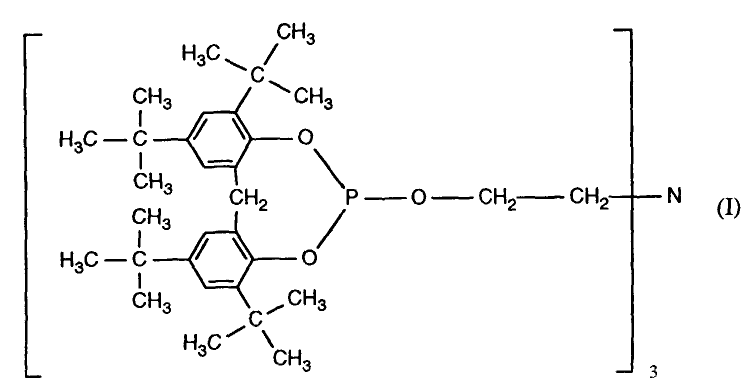 in which the amorphous modification is characterized by a glass transition temperature (T_{g}) within the range of 120-124°C (DSC) and by an X-ray diffraction pattern which is featureless; and the crystalline modifications are characterized by a melting point in the range of 232-243°C and 267-272°C; and by an X-ray diffraction pattern obtained using Cu-Kα which exhibits diffraction angles (2Θ) of very high intensity at 7.92, 16.94 and 18.52; lines of high intensity at 9.92 and 13.5; lines of medium intensity at 6.89, 8.70, 9.18, 10.70, 15.06, 16.04, 19.48, 20.36 and 21.32; lines of weak intensity at 5.26, 14.34 and 23.08.

2. A process for the preparation of the amorphous modification of the compound of formula I according to claim 1, which comprises melting said compound of formula I and rapidly cooling the melt.

3. A process according to claim 2 which comprises pouring the molten material onto a cool surface maintained below 100°C.

4. A process according to claim 3 wherein the cool surface is near 25°C.

5. A process for the preparation of the crystalline modifications of the compound of formula I according to claim 1, which comprises heating a melt of said compound of formula I at a temperature in the range of 170 to 200°C and crystallizing the novel crystalline modifications from the melt.

6. A process according to claim 5 which comprises seeding the melt with the novel crystalline modifications in order to increase the rate and efficiency of the melt crystallization.

7. A process according to claim 5 wherein the melt is heated under reduced pressure of from 400 mm Hg to 0.1 mm Hg.

8. A process according to claim 5 wherein the melt crystallization is carried out in an extruder or kneader.

9. A composition comprising
(a) an organic material subject to oxidative, thermal and/or light-induced degradation, and
(b) an effective stabilizing amount of an amorphous modification or crystalline modifications of a compound of formula I according to claim 1.

10. A composition according to claim 9 wherein the organic material is a lubricant, lubricating oil, natural fat or wax, or fat or wax based on a synthetic ester.

11. A composition according to claim 9 wherein the organic material is a natural, semi-synthetic or synthetic polymer.

12. A composition according to claim 9 wherein the organic material is a thermoplastic polymer.

13. A composition according to claim 9 wherein the organic material is a polyolefin.

14. A composition according to claim 9 wherein the organic polymer is polyethylene or polypropylene.

15. A composition according to claim 9 wherein the organic material is polypropylene.

16. A composition according to claim 9 which additionally contains a phenolic antioxidant, a light stabilizer or a processing stabilizer.

17. A composition according to claim 9 which additionally contains as a coadditive at least one compound of the benzofuran-2-one type.

18. A process for stabilizing an organic material against oxidative, thermal or light-induced degradation, which comprises incorporating therein or applying thereto an amorphous modification or crystalline modifications of a compound of formula I according to claim 1.

19. Use of an amorphous modification or crystalline modifications of a compound of for mula I according to claim 1 for stabilizing an organic material against oxidative, thermal and/or light-induced degradation.
